# FASCICULE DE BREVET EUROPEEN

(11) **EP 1 022 536 B1**
(45) Date de publication et mention de la délivrance du brevet: **17.12.2003**
(21) Numéro de dépôt: 00400054.3
(22) Date de dépôt: 11.01.2000
(51) Int. Cl.: F42B 3/04, F42C 19/09, B60R 21/26

(54) **Générateur de gaz hybride muni d'un initiateur à chargement explosif profilé**
Hybridgasgenerator mit Hohlladungszünder
Hybrid gas generator with hollow charge initiator

(30) Priorité: 25.01.1999 FR 9900747
(43) Date de publication de la demande: 26.07.2000
(73) Titulaire: Livbag S.N.C., 75017 Paris (FR)
(72) Inventeur: Perotto, Christian, 91610 Ballancourt (FR)
(74) Mandataire: Le Faou, Daniel

(56) Documents cités:
- EP-A- 0 673 809
- US-A- 3 191 533
- US-A- 3 670 925
- US-A- 5 131 680
- US-A- 5 263 740
- US-A- 5 468 015
- US-A- 5 601 308

## Description

La présente invention se rapporte au domaine de la sécurité automobile et concerne plus particulièrement un générateur de gaz hybride incluant un initiateur à chargement explosif profilé et destiné à gonfler un coussin de protection pour occupant d'un véhicule automobile.

Afin de limiter au maximum le risque d'accidents corporels couru par les occupants d'un véhicule automobile lors d'un choc frontal ou latéral, il a été proposé depuis une trentaine d'années d'incorporer des systèmes générateurs de gaz dans les véhicules automobiles permettant de gonfler des coussins de protection frontaux ou latéraux.

Parmi ces générateurs, nombre d'entre deux sont des générateurs de gaz hybrides qui ont la particularité de gonfler les coussins de protection du fait de la libération d'un gaz contenu jusqu'alors sous pression dans un réservoir étanche, ce gaz pouvant également être mélangé à d'autres gaz provenant de la combustion d'un chargement pyrotechnique associé. Ces générateurs de gaz hybrides, qui ont fait l'objet de différents brevets, comme par exemple le brevet US 5,602,361 et le brevet US 5,131,680, comportent généralement un organe mécanique de libération du gaz maintenu sous pression dans le réservoir provoquant, au moment voulu, la déchirure d'un opercule ou la destruction d'une paroi qui assurait auparavant la fermeture étanche du réservoir. Cet organe mécanique de libération est par exemple réalisé à l'aide d'un projectile métallique pouvant être propulsé par effet pyrotechnique. Malheureusement, les générateurs de gaz hybrides équipés de tels organes mécaniques de libération présentent de réels désavantages. En effet, le nombre relativement important de pièces métalliques difficiles à usiner nécessaires à la réalisation de tels organes confère à ces générateurs, d'une part, des coûts de fabrication élevés, ce qui est préjudiciable dans un marché très concurrentiel comme celui de la sécurité automobile, et d'autre part, une masse et un encombrement importants.

Il a alors été proposé, comme décrit dans le brevet US 5,263,740, de remplacer cet organe mécanique de libération par un initiateur à chargement pyrotechnique profilé placé au contact de l'opercule assurant la fermeture étanche du réservoir de gaz. Néanmoins, il en découle, d'une part, que le gaz froid contenu dans le réservoir est obligé de traverser l'initiateur lorsque celui-ci a provoqué la déchirure de l'opercule, ce qui a pour effet de réchauffer ce gaz de telle façon qu'il peut alors être susceptible de détériorer le coussin de protection encore plié autour du générateur, et d'autre part, qu'il est très difficile de loger un chargement pyrotechnique associé, destiné à être initié à l'aide de l'initiateur à chargement pyrotechnique profilé, ailleurs qu'à l'intérieur du réservoir.

Il a également été proposé, comme décrit dans le brevet US 5,468,015 (qui forme le préambule de la revendication 1), de remplacer cet organe mécanique de libération par un initiateur qui est associé à un chargement pyrotechnique et qui est apte à provoquer à distance la destruction d'un opercule frangible obturant initialement un réservoir de gaz. Néanmoins en fonctionnement, comme dans le brevet US 5,263,740, le gaz libéré est amené à se réchauffer en traversant ledit chargement pyrotechnique initié en combustion.

Le brevet US 3,191,533 (qui forme le préambule de la revendication 11) prévoit par ailleurs un dispositif comprenant un explosif à charge creuse permettant de perforer à distance une partie frangible d'une enceinte remplie de gaz. Ce dispositif n'est pas conçu pour être utilisé dans le domaine de la sécurité automobile.

L'homme du métier est donc toujours à la recherche d'un générateur de gaz hybride d'un coût peu élevé et de faibles masse et encombrement permettant de libérer des gaz froids dans les tout premiers instants de fonctionnement du générateur, mais aussi pouvant contenir un chargement pyrotechnique associé logé à l'extérieur ou à l'intérieur du réservoir, et permettant de gonfler aussi bien des coussins de protection frontaux que des coussins de protection latéraux.

L'objet de la présente invention est précisément de proposer un tel générateur hybride.

L'invention concerne donc un générateur de gaz hybride comme spécifié dans la revendication 1 et comprenant un réservoir présentant une extrémité ouverte dans laquelle est f ixée une enceinte située à l'extérieur dudit réservoir et munie d'orifices d'évacuation des gaz, ladite enceinte renfermant un système d'allumage et comportant une paroi pouvant être ouverte qui permet initialement de séparer de façon étanche l'intérieur du réservoir de l'intérieur de l'enceinte, ledit réservoir contenant au moins un gaz sous pression, le système d'allumage étant constitué par un initiateur à chargement explosif profilé apte à provoquer à distance la destruction de la paroi pouvant être ouverte de ladite enceinte.

Ainsi, grâce à la présence dans le générateur d'un initiateur capable, en fonctionnement, de délivrer un dard constitué par un plasma permettant de perforer à distance ladite paroi de l'enceinte, le gaz froid contenu dans le réservoir est libéré dans l'enceinte et peut alors s'échapper directement par les orifices d'évacuation des gaz pour gonfler le coussin de protection, sans avoir subi de contact direct avec l'initiateur.

Préférentiellement, le réservoir et l'enceinte sont de forme générale cylindrique, l'axe de révolution dudit réservoir et l'axe de révolution de ladite enceinte sont confondus et l'initiateur à chargement explosif profilé est situé sur ce même axe. L'enceinte peut être réalisée à partir d'un corps creux cylindrique présentant une paroi latérale portant les orifices d'évacuation des gaz, une paroi frontale portant une ouverture initialement fermée par un opercule et une extrémité ouverte dans laquelle est fixée une bague de fermeture supportant l'initiateur à chargement explosif profilé.

Avantageusement, l'initiateur à chargement explosif profilé est un initiateur électrique contenant, d'une part, une composition pyrotechnique d'amorçage relayée par un explosif primaire relais, et d'autre part, un explosif composite comprenant au moins un liant et au moins une nitramine, ledit explosif composite étant profilé en forme de charge creuse. Cet explosif primaire relais est par exemple constitué par de la penthrite ou de l'azoture d'argent et permet d'initier l'explosif composite formant le chargement profilé. Ce type d'initiateur est très efficace pour délivrer un dard dont le champ d'action est très étendu.

Un chargement pyrotechnique associé est logé dans l'enceinte. Ce chargement pyrotechnique est allumé grâce à l'initiateur à chargement explosif profilé et permet, une fois qu'une partie du gaz froid issue du réservoir a amorcé le gonflage du coussin de protection, de générer des gaz venant se mélanger au gaz froid afin de déployer totalement le coussin de protection.

Préférentiellement, le chargement pyrotechnique associé est sous la forme d'un bloc annulaire disposé autour de l'initiateur à chargement explosif profilé. L'enceinte comporte une cloison interne munie d'une ouverture fermée par un opercule, ladite cloison interne permettant de diviser ladite enceinte en une première chambre d'initiation et de combustion contenant l'initiateur à chargement explosif profilé ainsi que le chargement pyrotechnique et en une seconde chambre de mélange et d'évacuation des gaz présentant la paroi pouvant être ouverte et les orifices d'évacuation des gaz.

L'initiateur à chargement explosif profilé est constitué à l'aide :
i) d'un support d'allumage,
ii) d'un capuchon fragmentable présentant un fond creusé, une paroi latérale et une extrémité ouverte fixée sur le support d'allumage, ledit capuchon renfermant au moins une composition explosive à base de nitramine et ladite paroi latérale comportant au moins une zone fragilisée,
iii) et d'un système d'initiation électrique reliant le support d'allumage à une source de courant.

Ainsi, cet initiateur, qui permet de délivrer un dard destiné à fracturer la paroi pouvant être ouverte de l'enceinte afin de libérer le gaz froid contenu dans le réservoir, comporte également une zone fragilisée latérale dont la destruction en fonctionnement permet aux gaz générés par l'initiateur de venir au contact du chargement pyrotechnique associé. Cela est particulièrement avantageux lorsque ce dernier est sous la forme d'un bloc annulaire disposé autour de l'initiateur.

Préférentiellement, le capuchon fragmentable renferme une poudre renforçatrice intercalée entre l'extrémité ouverte du capuchon et la composition explosive qui est au contact du fond creusé, de manière à ce que ladite poudre renforçatrice soit disposée en regard de la zone fragilisée, cette dernière pouvant être constituée par une bande périphérique amincie de la paroi latérale du capuchon ou par des orifices portés par ladite paroi latérale et fermés par des opercules. Préférentiellement encore, cette poudre renforçatrice sera mélangée à l'explosif primaire relais.

Avantageusement, le support d'allumage est constitué par un support isolant sur lequel est déposé un élément résistif chauffant ainsi que la composition pyrotechnique d'amorçage, ledit élément résistif chauffant pouvant consister par exemple en un pont semi-conducteur ou en un fil résistif qui est relié à une source de courant à l'aide de deux broches conductrices du courant électrique constituant le système d'initiation électrique.

Selon une seconde variante de réalisation de l'invention, un chargement pyrotechnique associé peut être logé dans le réservoir et disposé en regard de la paroi pouvant être ouverte de l'enceinte. Ce chargement pyrotechnique est allumé grâce au dard délivré par l'initiateur à chargement explosif profilé et permet, une fois qu'une partie du gaz froid issue du réservoir a amorcé le gonflage du coussin de protection, de générer des gaz venant se mélanger au gaz froid afin de déployer totalement le coussin de protection.

Préférentiellement, le chargement pyrotechnique est placé à l'intérieur d'un godet possédant un fond circulaire plat et une paroi latérale dont l'extrémité libre est fixée dans l'enceinte.

Préférentiellement encore, le fond circulaire plat comporte un trou central fermé par un opercule et le chargement pyrotechnique, d'une part, est calé par une bague de séparation fixée dans la paroi latérale du godet, et d'autre part, entoure un dispositif relais d'amorçage qui repose sur un ajutage central profilé de ladite bague de séparation.

Avantageusement, la paroi latérale du godet comporte des orifices de communication entre son extrémité libre et la bague de séparation.

L'invention concerne également un initiateur électro-pyrotechnique comme spécifié dans la revendication 11 et comprenant notamment un support d'allumage qui est fixé dans l'extrémité ouverte d'un capuchon fragmentable renfermant au moins une composition explosive et un système d'initiation qui permet de relier ledit support d'allumage à une source de courant électrique, le capuchon fragmentable présentant un fond creusé dont la surface intérieure est au contact de la composition explosive, caractérisé en ce que :
le capuchon présente une paroi latérale comportant au moins une zone fragilisée.

Selon une première variante de réalisation de l'invention, le capuchon renferme une poudre renforçatrice intercalée entre l'extrémité ouverte du capuchon et la composition explosive, de manière à ce que la poudre renforçatrice soit disposée en regard de la zone fragilisée.

Selon une seconde variante de réalisation de l'invention, la composition explosive est constituée par un explosif composite comportant au moins un liant et au moins une nitramine. Avantageusement, le capuchon renferme un explosif primaire relais. Cet explosif primaire relais est avantageusement mélangé à une poudre renforçatrice et ce mélange est intercalé entre l'extrémité ouverte du capuchon et la composition explosive, de manière à être disposé en regard de la zone fragilisée.

Préférentiellement, la zone fragilisée est constituée par une bande périphérique amincie de la paroi latérale du capuchon ou encore par des orifices portés par ladite paroi latérale et fermés par des opercules.

Avantageusement, le diamètre du capuchon est au moins égal à 8mm et le fond est creusé en forme de cône, ce dernier présentant un angle d'ouverture au plus égal à 30°.

Avantageusement encore, le support d'allumage est constitué par un support isolant sur lequel est déposé un élément résistif chauffant ainsi qu'une composition pyrotechnique d'amorçage, ledit élément résistif chauffant pouvant consister par exemple en un pont sémi-conducteur ou en un fil résistif disposé au contact de la composition pyrotechnique d'amorçage et pouvant être relié à une source de courant électrique à l'aide d'un système d'initiation comportant deux broches conductrices. Le système d'initiation peut aussi être constitué par un câble optique associé à un dispositif laser.

Un générateur de gaz hybride selon l'invention apporte donc une solution au problème posé précédemment puisque :
- il ne nécessite pas d'organe mécanique de libération des gaz,
- il permet au gaz froid contenu dans le réservoir d'amorcer le gonflage du coussin de protection grâce à une ouverture dudit réservoir à distance,
- il peut contenir un chargement pyrotechnique associé générateur de gaz aussi bien dans l'enceinte que dans le réservoir,
- il permet de gonfler un coussin de protection latéral de faible volume, la source de gaz nécessaire pour gonfler le coussin pouvant alors provenir exclusivement du gaz contenu sous pression dans le réservoir.

On décrit ci-après aux figures 1 à 4 le mode de réalisation préférée d'un générateur de gaz hybride selon l'invention ainsi que deux autres modes de réalisation possibles.
La figure **1** est une vue en coupe longitudinale d'un générateur de gaz hybride selon le mode de réalisation préférée de l'invention.
La figure **2** est une vue en coupe longitudinale d'un initiateur à chargement explosif profilé contenu dans le générateur représenté à la figure 1.
La figure **3** est une vue en coupe longitudinale d'un générateur de gaz hybride selon un autre mode de réalisation de l'invention pour gonfler un coussin de protection latéral.
La figure **4** est une vue en coupe longitudinale d'un générateur de gaz hybride selon un autre mode de réalisation de l'invention.

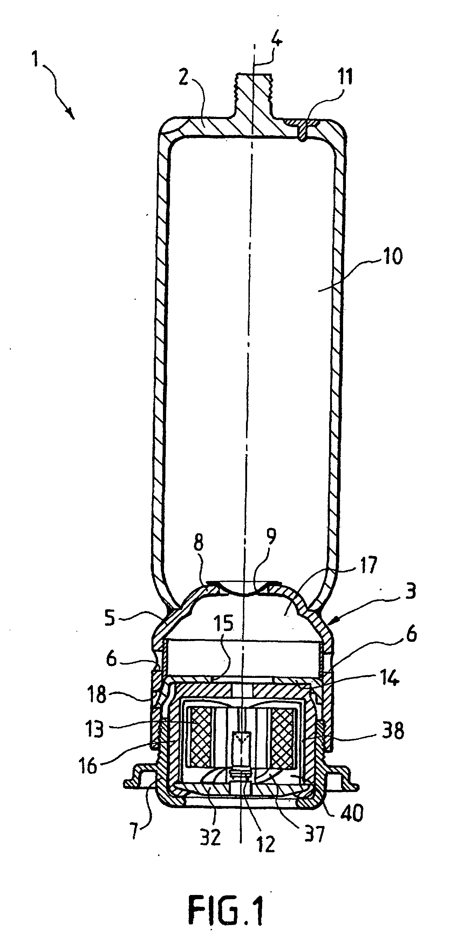

En se reportant à la figure 1, on observe qu'un générateur 1 de gaz hybride selon le mode de réalisation préférée de l'invention est constitué à partir d'un réservoir 2 de forme générale cylindrique qui présente une extrémité ouverte fixée par soudure dans une enceinte 3 elle-même de forme générale cylindrique, l'axe de révolution 4 du réservoir 2 étant confondu avec celui de l'enceinte 3. Le réservoir 2 contient un gaz 10 froid inerte sous pression, par exemple de l'argon, qui est initialement introduit par une valve 11 fermée par soudure. L'enceinte 3 est réalisée à l'aide d'un corps creux 5 cylindrique qui présente, d'une part, une paroi latérale munie d'orifices d'évacuation des gaz 6, cette paroi latérale se terminant par une extrémité ouverte dans laquelle est fixée par vissage une bague de fermeture 7, et d'autre part, une paroi frontale 8 qui porte une ouverture initialement fermée par un opercule 9. Une cloison interne 14, qui est fixée dans la paroi latérale du corps creux 5 par encliquetage dans des perforations 18 et qui est munie d'une ouverture 15 fermée par un opercule, divise l'enceinte 3 en une première chambre d'initiation et de combustion 40 et en une seconde chambre de mélange et d'évacuation des gaz 17 contenant la paroi frontale 8 ainsi que les orifices d'évacuation des gaz 6. Un module pyrotechnique est maintenu dans la chambre d'initiation et de combustion 40 à l'aide de la bague de fermeture 7 et ce module pyrotechnique est constitué à partir d'une bague de calage 16 dans laquelle est insérée une enveloppe 38 cylindrique. Cette bague de calage 16 présente, d'une part, un fond doté d'un orifice central en appui contre la cloison interne 3, et d'autre part, une extrémité ouverte maintenant par sertissage un porte-initiateur 32 dans lequel est inséré un initiateur 12 à chargement pyrotechnique profilé qui sera décrit en détail plus loin et qui est lui-même entouré par un chargement pyrotechnique 13. Ce dernier a la forme d'un bloc annulaire et l'axe de révolution de ce bloc ainsi que de l'initiateur 12 est confondu avec l'axe de révolution 4. Un ressort 37 logé entre le porte-initiateur 32 et le bloc annulaire permet, avec l'aide de l'enveloppe 38 cylindrique, de maintenir ledit bloc dans une position stable.

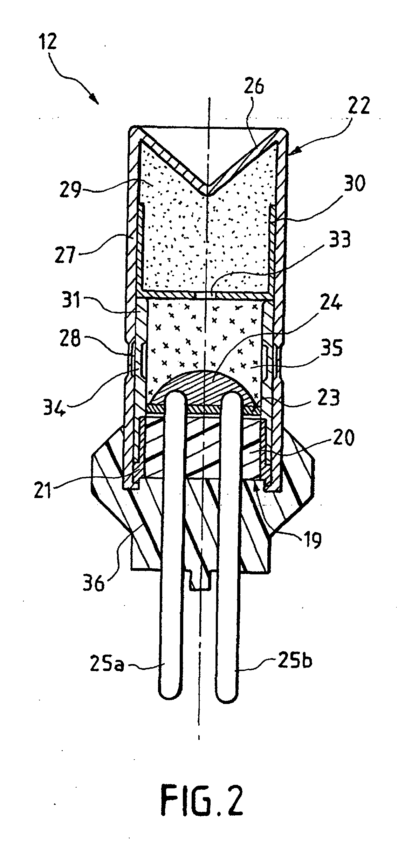

En se référant plus particulièrement à la figure 2, on observe que l'initiateur 12 à chargement explosif profilé est réalisé à partir d'un support d'allumage 19 comprenant, d'une part, un support isolant 20 discoïde enserré par une rondelle 21 qui est fixé par sertissage dans l'extrémité libre de la paroi latérale 27 d'un capuchon 22 cylindrique fragmentable, et d'autre part, un élément résistif chauffant 23 sous la forme de plaques métalliques minces semi-conductrices posées sur le support isolant 20 et elles-mêmes recouvertes par une composition pyrotechnique d'amorçage 24. Un système d'initiation permettant de relier l'initiateur 12 à une source de courant électrique (non représentée) est constitué à l'aide de deux broches 25a et 25b métalliques en partie enserrées dans le support isolant 20 et présentant chacune une extrémité au contact des plaques minces semi-conductrices.

Plus précisément, le capuchon 22 comporte un fond 26 creusé en forme de cône et sa paroi latérale 27 présente une zone fragilisée sous la forme d'une bande périphérique amincie 28. Le capuchon 22 contient une composition explosive 29 qui est au contact du fond 26 et qui remplit ledit capuchon 22 sur environ une demi-longueur de sa paroi latérale 27. Cette composition explosive 29, qui est constituée à partir d'un explosif composite comportant au moins un liant tel que le polybutadiène ou le polyazoture de glycidyle et au moins une nitramine telle que l'hexogène ou l'octogène, est maintenue de façon compacte à l'aide d'un plot 30 cylindrique qui prend appui sur l'une des deux extrémités ouvertes d'un chemisage 31 cylindrique dont l'autre extrémité ouverte vient en butée contre la rondelle 21. Ce plot 30 comporte une perforation centrale 33 et le chemisage 31 présente une bande annulaire mince 34 disposée en regard de la bande périphérique amincie 28 du capuchon 22. Le capuchon 22 renferme également un mélange 35 contenant une poudre renforçatrice et un explosif primaire relais tel que la penthrite, ce mélange 35 remplissant le volume délimité par le plot 30, le chemisage 31 et les plaques minces semi-conductrices recouvertes par la composition pyrotechnique d'amorçage 24.

Enfin, un surmoulage 36 de résine thermoplastique enrobe partiellement les deux broches 25a et 25b métalliques et assure, avec le capuchon 22, l'étanchéité de l'initiateur 12.

En fonctionnement, un courant de mise à feu est délivré par la source de courant et est transmis à l'élément résistif chauffant 23 de l'initiateur 12 par les broches métalliques 25a et 25b, ce qui provoque l'allumage par effet joule de la composition pyrotechnique d'amorçage 24, cet allumage entraînant alors l'initiation en détonation de l'explosif primaire relais du mélange 35 et par suite l'initiation en détonation de la composition explosive 29 par la perforation centrale 33 du plot 30. L'onde de détonation ainsi créée donne naissance, lorsqu'elle atteint le sommet du fond 26, à un dard perforant suivant l'axe de révolution 4. Ce dard va successivement rompre l'enveloppe 38, puis l'opercule fermant l'ouverture 15 et l'opercule 9 fermant l'ouverture portée par la paroi frontale 8 du corps creux 5. Le gaz 10 froid inerte peut alors commencer à s'échapper par ladite ouverture, pénétrer dans la chambre de mélange et d'évacuation des gaz 17 pour finalement s'échapper par les orifices d'évacuation des gaz 6 et amorcer le déploiement du coussin de protection (non représenté).

Parallèlement à cela, les gaz générés par la combustion de la poudre renforçatrice du mélange 35 entraînent successivement la destruction de la bande annulaire mince 34 du chemisage 31 et de la bande périphérique amincie 28 du capuchon 22. Ces gaz pénètrent alors dans la chambre d'initiation et de combustion 40 et provoquent l'allumage du chargement pyrotechnique 13. Les gaz générés par ce dernier traversent l'enveloppe 38 ainsi que l'ouverture 15, se mélangent alors au gaz 10 froid inerte provenant du réservoir 2 dans la chambre de mélange et d'évacuation des gaz 17 et ce mélange s'échappe finalement par les orif ices d'évacuation des gaz 6 afin de gonfler totalement le coussin de protection.

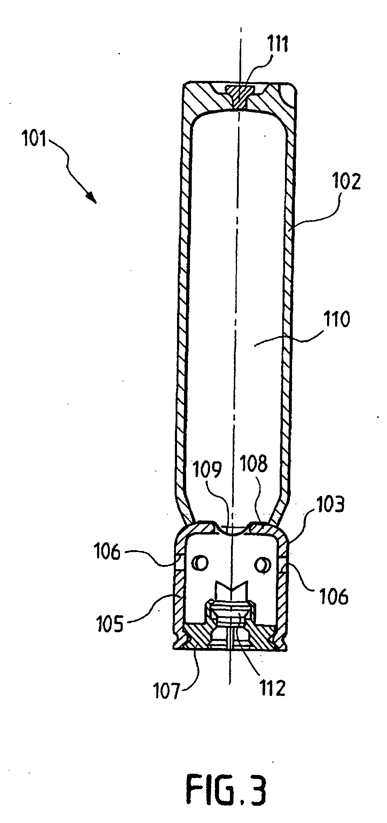

Comme représenté à la figure 3, il est possible de réaliser un générateur de gaz hybride 101 selon l'invention plus spécialement adapté pour gonfler un coussin de protection latéral.

De façon analogue à ce qui a été décrit précédemment, ce générateur 101 est constitué à partir d'un réservoir 102 de forme générale cylindrique qui présente une extrémité ouverte fixée par soudure dans une enceinte 103 elle-même de forme générale cylindrique. Le réservoir 102 contient un gaz 110 froid inerte sous pression qui est introduit par une valve 111. L'enceinte 103 est réalisée à l'aide d'un corps creux 105 qui présente, d'une part, une paroi latérale munie d'orifices d'évacuation de gaz 106, cette paroi latérale se terminant par une extrémité ouverte dans laquelle est fixée par sertissage une bague de fermeture 107, et d'autre part, une paroi frontale 108 qui porte une ouverture initialement fermée par un opercule 109. Un initiateur 112 à chargement explosif profilé selon l'invention est inséré dans la bague de fermeture 107 et est disposé en regard de l'opercule 109.

En fonctionnement, un ordre de mise à feu est transmis à l'initiateur 112 et ce dernier délivre alors un dard permettant de perforer l'opercule 109. Le gaz 110 froid inerte peut donc s'échapper du réservoir 102 puis traverser les orifices d'évacuation de gaz 106 pour finalement gonfler le coussin de protection.

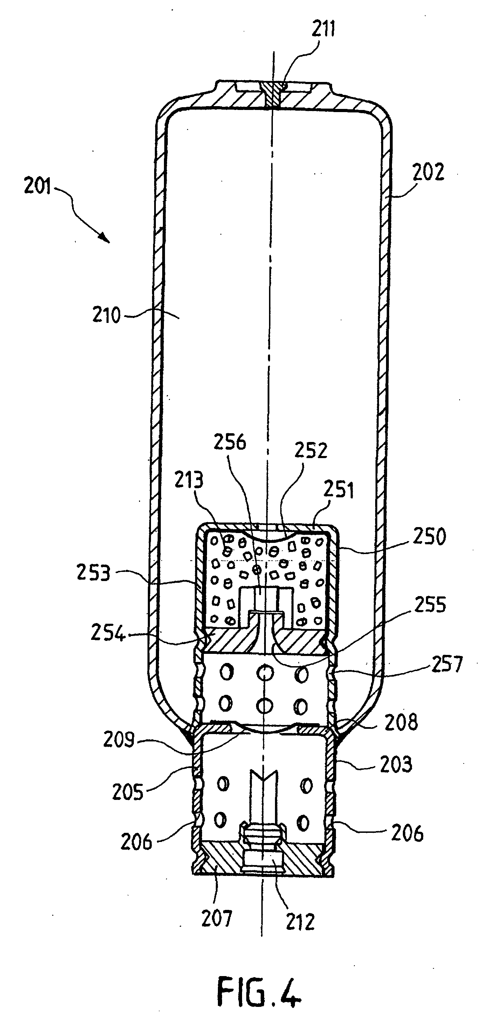

Comme représenté à la figure 4, on observe une autre possibilité de réalisation d'un générateur de gaz hybride 201 selon l'invention.

De façon analogue à ce qui a été décrit précédemment, ce générateur 201 est constitué à partir d'un réservoir 202 de forme générale cylindrique qui présente une extrémité ouverte fixée par soudure dans une enceinte 203 elle-même de forme générale cylindrique. L'enceinte 203 est réalisée à l'aide d'un corps creux 205 qui présente, d'une part, une paroi latérale munie d'orifices d'évacuation des gaz 206, cette paroi latérale se terminant par une extrémité ouverte dans laquelle est fixée par sertissage une bague de fermeture 207, et d'autre part, une paroi frontale 208 qui porte une ouverture initialement fermée par un opercule 209. Un initiateur 212 à chargement explosif profilé selon l'invention est inséré dans la bague de fermeture 207 et est disposé en regard de l'opercule 209.

Le réservoir 202 contient un godet 250 cylindrique possédant, d'une part, un fond circulaire plat 251 qui comporte un trou central fermé par un opercule 252, et d'autre part, une paroi latérale 253 dont l'extrémité libre est fixée par soudure dans l'enceinte 203. Une bague de séparation 254 est fixée par sertissage dans la paroi latérale 253 du godet 250 et présente un ajutage central profilé 255 sur lequel repose un dispositif relais d'amorçage 256. Un chargement pyrotechnique 213 sous forme de pastilles est disposé autour du dispositif relais d'amorçage 256 et remplit le volume délimité par la bague de séparation 254, le fond circulaire plat 251 et la paroi latérale 253 du godet 250, cette dernière comportant des orifices de communication 257 non operculés entre son extrémité libre et la bague de séparation 254.

Le réservoir 202 contient également un gaz 210 froid inerte sous pression introduit par une valve 211.

En fonctionnement, un ordre de mise à feu est transmis à l'initiateur 212 et ce dernier délivre alors un dard permettant de perforer l'opercule 209. Le gaz 210 froid inerte sous pression peut donc commencer à s'échapper du réservoir 202 puis traverser les orifices d'évacuation des gaz 206 pour amorcer le déploiement du coussin de protection. Le dard délivré par l'initiateur 212 provoque par ailleurs l'initiation du dispositif relais d'amorçage 256 qui va lui-même entraîner l'allumage du chargement pyrotechnique 213. Les gaz générés par ce dernier, après avoir perforé l'opercule 252, se mélangent au gaz 210 froid inerte dans le réservoir 202, traversent les orifices de communication 257 du godet 250, puis s'échappent du réservoir 202 pour finalement gonfler totalement le coussin de protection après avoir traversé les orifices d'évacuation des gaz 206.

Il est également possible d'utiliser, à la place de la bague de séparation 254 qui comporte un ajutage central profilé 255, une bague de séparation discoïde munie d'un simple orifice central. Dans ce cas là, le dispositif relais d'amorçage peut se décomposer, d'une part, en une amorce logée dans l'orifice central, et d'autre part, en un capuchon fragmentable qui contient une composition pyrotechnique renforçatrice et qui surmonte ladite amorce, le chargement pyrotechnique étant alors disposé autour du capuchon.

## Revendications

1. Générateur de gaz hybride (1, 101, 201) comprenant un réservoir (2, 102, 202) présentant une extrémité ouverte dans laquelle est fixée une enceinte (3, 103, 203) située à l'extérieur dudit réservoir (2, 102, 202) et munie d'orifices d'évacuation des gaz (6, 106, 206), un chargement pyrotechnique (13) étant logé dans ladite enceinte et ladite enceinte (3, 103, 203) renfermant un système d'allumage et comportant une paroi pouvant être ouverte qui permet initialement de séparer de façon étanche l'intérieur du réservoir (2, 102, 202) de l'intérieur de l'enceinte, ledit réservoir (2, 102, 202) contenant au moins un gaz sous pression, **caractérisé en ce que** le système d'allumage est constitué par un initiateur (12, 112, 212) à chargement explosif profilé, apte à provoquer à distance la destruction de la paroi pouvant être ouverte de ladite enceinte (3, 103, 203), l'initiateur (12, 112, 212) à chargement explosif profilé contenant,
i) une composition pyrotechnique d'amorçage (24) relayée par un explosif primaire relais et
ii) un explosif composite comprenant au moins un liant et au moins une nitramine, ledit explosif composite étant profilé en forme de charge creuse,
et **en ce que** ladite enceinte (3) comporte une cloison interne(14) munie d'une ouverture (15) fermée par un opercule, ladite cloison interne (14) permettant de diviser ladite enceinte (3) en une première chambre d'initiation et de combustion (40) contenant l'initiateur (12) à chargement explosif profilé ainsi que le chargement pyrotechnique (13) et en une seconde chambre de mélange et d'évacuation des gaz (17) présentant la paroi pouvant être ouverte et les orifices d'évacuation des gaz (6).

2. Générateur de gaz hybride (1, 101, 201) selon la revendication 1, **caractérisé en ce que**,
i) ledit réservoir (2, 102, 202) et ladite enceinte (3, 103, 203) sont de forme générale cylindrique, l'axe de révolution (4) du réservoir (2, 102, 202) et l'axe de révolution de l'enceinte étant confondus,
ii) l'initiateur (12, 112, 212) à chargement explosif profilé est situé sur l'axe de révolution (4) dudit réservoir (2, 102, 202) et de ladite enceinte (3, 103, 203).

3. Générateur de gaz hybride (1, 101, 201) selon la revendication 2, **caractérisé en ce que** l'enceinte (3, 103, 203) est réalisée à partir d'un corps creux (5, 105, 205) cylindrique présentant une paroi latérale portant les orifices d'évacuation des gaz (6, 106, 206), une paroi frontale (8, 108, 208) portant une ouverture initialement fermée par un opercule (9, 109, 209) et une extrémité ouverte dans laquelle est fixée une bague de fermeture (7, 107, 207) supportant l'initiateur (12, 112, 212) à chargement explosif profilé.

4. Générateur de gaz hybride (1) selon la revendication 1, **caractérisé en ce que** le chargement pyrotechnique (13) est sous la forme d'un bloc annulaire disposé autour de l'initiateur (12) à chargement explosif profilé.

5. Générateur de gaz hybride (1) selon la revendication 4, **caractérisé en ce que** l'initiateur (12) à chargement explosif profilé est constitué à l'aide
i) d'un support d'allumage (19),
ii) d'un capuchon (22) fragmentable présentant un fond (26) creusé, une paroi latérale (27) et une extrémité ouverte fixée sur le support d'allumage (19), ledit capuchon (22) renfermant au moins une composition explosive (29) à base de nitramine et ladite paroi latérale comportant au moins une zone fragilisée,
iii) et un système d'initiation électrique reliant le support d'allumage (19) à une source de courant.

6. Générateur de gaz hybride (1) selon la revendication 5, **caractérisé en ce que** le capuchon (22) renferme une poudre renforçatrice intercalée entre l'extrémité ouverte du capuchon (22) et la composition explosive (29) qui est au contact du fond (26), de manière à ce que ladite poudre renforçatrice soit disposée en regard de la zone fragilisée.

7. Générateur de gaz hybride (1) selon la revendication 5, **caractérisé en ce que** la zone fragilisée est constituée par une bande périphérique amincie (28) de la paroi latérale (27).

8. Générateur de gaz hybride (1) selon la revendication 5, **caractérisé en ce que** le support d'allumage (19) est constitué par un support isolant (20) sur lequel est déposé un élément résistif chauffant (23) ainsi que la composition pyrotechnique d'amorçage (24) .

9. Générateur de gaz hybride (1) selon la revendication 8, **caractérisé en ce que** le système d'initiation électrique est constitué par deux broches (25a, 25b) conductrices du courant électrique qui sont reliées à l'élément résistif chauffant (23).

10. Générateur de gaz hybride (1) selon la revendication 8, **caractérisé en ce que** l'élément résistif chauffant est un pont semi-conducteur.

11. Initiateur électro-pyrotechnique (12) comprenant notamment un support d'allumage (19) qui est fixé dans l'extrémité ouverte d'un capuchon (22) fragmentable renfermant au moins une composition explosive (29) et un système d'initiation qui permet de relier ledit support d'allumage (19) à une source de courant électrique, le capuchon (22) présentant un fond (26) creusé dont la surface intérieure est au contact de la composition explosive (29), **caractérisé en ce que**, le capuchon (22) présente une paroi latérale (27) comportant au moins une zone fragilisée.

12. Initiateur électro-pyrotechnique (12) selon la revendication 11, **caractérisé en ce que** la composition explosive (29) est constituée par un explosif composite comportant au moins un liant et au moins une nitramine.

13. Initiateur électro-pyrotechnique (12) selon la revendication 12, **caractérisé en ce que** le capuchon (22) renferme un explosif primaire relais.

14. Initiateur électro-pyrotechnique (12) selon la revendication 11, **caractérisé en ce que** le capuchon (22) renferme une poudre renforçatrice intercalée entre l'extrémité ouverte du capuchon (22) et la composition explosive (29), de manière à ce que la poudre renforçatrice soit disposée en regard de la zone fragilisée.

15. Initiateur électro-pyrotechnique (12) selon la revendication 12, **caractérisé en ce que** le capuchon (22) renferme un mélange (35) composé d'une poudre renforçatrice et d'un explosif primaire relais, ledit mélange étant intercalé entre l'extrémité ouverte du capuchon (22) et la composition explosive (29) de manière à être disposée en regard de la zone fragilisée.

16. Initiateur électro-pyrotechnique (12) selon la revendication 11, **caractérisé en ce que** la zone fragilisée est constituée par une bande périphérique amincie (28) de la paroi latérale (27).

17. Initiateur électro-pyrotechnique (12) selon la revendication 11, **caractérisé en ce que** le diamètre du capuchon (22) est au moins égal à 8mm.

18. Initiateur électro-pyrotechnique (12) selon la revendication 11, **caractérisé en ce que** ledit fond (26) est creusé en forme de cône et présente un angle d'ouverture au plus égal à 30°.

19. Initiateur électro-pyrotechnique (12) selon la revendication 11, **caractérisé en ce que** le support d'allumage (19) est constitué par un support isolant (20) sur lequel est déposé un élément résistif chauffant (23) ainsi qu'une composition pyrotechnique d'amorçage (24) .

20. Initiateur électro-pyrotechnique (12) selon la revendication 19, **caractérisé en ce que** le système d'initiation est constitué par deux broches (25a, 25b) conductrices du courant électrique qui sont reliées à l'élément résistif chauffant (23).

21. Initiateur électro-pyrotechnique (12) selon la revendication 19, **caractérisé en ce que** ledit élément résistif chauffant (23) est un pont semi-conducteur.

22. Initiateur électro-pyrotechnique (12) selon la revendication 19, **caractérisé en ce que** l'élément résistif chauffant est un fil résistif disposé au contact de la composition pyrotechnique d'amorçage (24).

## Claims

1. Hybrid gas generator (1, 101, 201) comprising a container (2, 102, 202) having an open end in which a compartment (3, 103, 203), which is located outside the said container (2, 102, 202) and is provided with gas discharge orifices (6, 106, 206), is fixed, the said compartment (3, 103, 203), which accommodates a pyrotechnic charge (13), containing an igniting system and having an openable wall which initially makes it possible to separate the inside of the container (2, 102, 202) from the inside of the compartment (3, 103, 203), in a leaktight fashion, the said container (2, 102, 202) holding at least one gas under pressure, **characterized in that** the igniting system consists of an initiator (12, 112, 212) with shaped explosive charge capable of destroying the openable wall of the said compartment (3, 103, 203) from a distance, the initiator (12, 112, 212) with shaped explosive charge containing :
i) a starting pyrotechnic composition (24) relayed by a relay primary explosive,
ii) a composite explosive comprising at least one binder and at least one nitramine, the said composite explosive being shaped, in the form of a hollow charge,
and **in that** the said compartment (3) has an internal partition (14) provided with an opening (15) closed by a diaphragm, the said internal partition (14) making it possible to divide the said compartment (3) into a first chamber for initiation and combustion (40) containing the initiator (12) with shaped explosive charge as well as the pyrotechnic charge (13), and a second chamber for mixing and discharging the gases (17) which includes the openable wall and the gas discharge orifices (6).

2. Hybrid gas generator (1, 101, 201) according to Claim 1, **characterized in that**:
i) the said container (2, 102, 202) and the said compartment (3, 103, 203) are of cylindrical general shape, the axis of revolution (4) of the container (2, 102, 202) and the axis of revolution of the compartment (3, 103, 203) being the same,
ii) the initiator (12, 112, 212) with shaped explosive charge is located on the axis of revolution (4) of the said container (2, 102, 202) and of the said compartment (3, 103, 203).

3. Hybrid gas generator (1, 101, 201) according to Claim 2, **characterized in that** the compartment (3, 103, 203) is made from a cylindrical hollow body (5, 105, 205) having a side wall in which there are gas discharge orifices (6, 106, 206), a front wall (8, 108, 208) in which there is an opening initially closed by a diaphragm (9, 109, 209), and an open end in which a closing ring (7, 107, 207), supporting the initiator (12, 112, 212) with shaped explosive charge, is fixed.

4. Hybrid gas generator (1) according to Claim 1, **characterized in that** the pyrotechnic charge (13) is in the form of an annular block arranged around the initiator (12) with shaped explosive charge.

5. Hybrid gas generator (1) according to Claim 4, **characterized in that** the initiator (12) with shaped explosive charge is formed using :
i) a igniting medium (19),
ii) a fragmentable cap (22) having a hollowed bottom (26), a side wall (27) and an open end fixed on the igniting medium (19), the said cap (22) containing at least one explosive composition (29) based on nitramine and the said side wall having at least one weakened zone,
iii) and an electrical initiation system connecting the igniting medium (19) to a current source.

6. Hybrid gas generator (1) according to Claim 5, **characterized in that** the cap (22) contains a reinforcing powder interposed between the open end of the cap (22) and the explosive composition (29) which is in contact with the bottom (26) in a manner such that the said reinforcing powder is arranged in front of the weakened zone.

7. Hybrid gas generator (1) according to Claim 5, **characterized in that** the weakened zone consists of a narrowed peripheral band (28) of the side wall (27).

8. Hybrid gas generator (1) according to Claim 5, **characterized in that** the igniting medium (19) consists of an insulating medium (20) on which a resistive heating element (23) as well as the starting pyrotechnic composition (24) are deposited.

9. Hybrid gas generator (1) according to Claim 8, **characterized in that** the electrical initiation system consists of two pins (25a, 25b) which conduct the electric current and are connected to the resistive heating element (23).

10. Hybrid gas generator (1) according to Claim 8, **characterized in that** the resistive heating element is a semiconductor bridge.

11. Electro-pyrotechnic initiator (12) comprising, in particular, an igniting medium (19) in which the open end of a fragmentable cap (22) containing at least one explosive composition (29) is fixed, and an initiation system which makes it possible to connect the said igniting medium (19) to an electric current source, the cap (22) having a hollowed bottom (26) whose inner surface is in contact with the explosive composition (29), **characterized in that** the cap (22) has a side wall (27) including at least one weakened zone.

12. Electro-pyrotechnic initiator (12) according to Claim 11, **characterized in that** the explosive composition (29) consists of a composite explosive containing at least one binder and at least one nitramine.

13. Electro-pyrotechnic initiator (12) according to Claim 12, **characterized in that** the cap (22) contains a relay primary explosive.

14. Electro-pyrotechnic initiator (12) according to Claim 11, **characterized in that** the cap (22) contains a reinforcing powder interposed between the open end of the cap (22) and the explosive composition (29) in a manner such that the reinforcing powder is arranged in front of the weakened zone.

15. Electro-pyrotechnic initiator (12) according to Claim 12, **characterized in that** the cap (22) contains a mixture (35) formed by a reinforcing powder and a relay primary explosive, the said mixture (35) being interposed between the open end of the cap (22) and the explosive composition (29) so as to be arranged in front of the weakened zone.

16. Electro-pyrotechnic initiator (12) according to Claim 11, **characterized in that** the weakened zone consists of a narrowed peripheral band (28) of the side wall (27).

17. Electro-pyrotechnic initiator (12) according to Claim 11, **characterized in that** the diameter of the cap (22) is at least equal to 8 mm.

18. Electro-pyrotechnic initiator (12) according to Claim 11, **characterized in that** the said bottom (26) is hollowed in the shape of a cone and has a vertex angle at most equal to 30°.

19. Electro-pyrotechnic initiator (12) according to Claim 11, **characterized in that** the igniting medium (19) consists of an insulating medium (20) on which a resistive heating element (23) as well as a starting pyrotechnic composition (24) are deposited.

20. Electro-pyrotechnic initiator (12) according to Claim 19, **characterized in that** the initiation system consists of two pins (25a, 25b) which conduct the electric current and are connected to the resistive heating element (23).

21. Electro-pyrotechnic initiator (12) according to Claim 19, **characterized in that** the resistive heating element (23) is a semiconductor bride.

22. Electro-pyrotechnic initiator (12) according to Claim 19, **characterized in that** the resistive heating element is a resistor wire arranged in contact with the starting pyrotechnic composition (24).

## Patentansprüche

1. Hybridgasgenerator (1, 101, 201) mit einem Behälter (2, 102, 202), der ein offenes Ende aufweist, in welchem eine Einfassung (3, 103, 203) befestigt ist, welche außerhalb des Behälters (2, 102, 202) angeordnet und mit Öffnungen zur Gasableitung (6, 106, 206) versehen ist, wobei eine pyrotechnische Ladung (13) in der Einfassung gelagert ist und die Einfassung (3, 103, 203) ein Zündungssystem umschließt und eine Wand aufweist, die offen sein kann, und die anfangs ermöglicht, in dichter Weise den Innenraum des Behälters (2, 102, 202) von dem Inneren der Einfassung zu trennen, wobei der Behälter (2, 102, 202) wenigstens ein unter Druck stehendes Gas enthält, **dadurch gekennzeichnet, dass** das Zündungssystem von einem Initiator (12, 112, 212) mit einer profilierten explosiven Ladung gebildet ist, der dazu in der Lage ist, mit Abstand die Zerstörung der möglicherweise offenen Wand der Einfassung (3, 103, 203) zu bewirken, wobei der Initiator (12, 112, 212) mit profilierter explosiver Ladung enthält:
i) eine pyrotechnische Zündungszusammensetzung (24), die von einem primären Relais-Sprengstoff übertragen wird und
ii) einen Verbundsprengstoff mit wenigstens einem Bindemittel und wenigstens einem Nitramin, wobei der Verbundsprengstoff in Form einer Hohlladung profiliert ist,
und dass die Einfassung (3) eine innere Trennwand (14) aufweist, die mit einer von einem Innenhütchen verschlossenen Öffnung (15) versehen ist, wobei die innere Trennwand (14) ermöglicht, die Einfassung (3) zu unterteilen in eine erste Initiierungsund Brennkammer (40), die den Initiator (12) mit profilierter explosiver Ladung sowie die pyrotechnische Ladung (13) enthält, und in eine zweite Kammer zur Mischung und Ableitung der Gase (17), welche die Wand, die offen sein kann, und die Öffnungen zur Ableitung der Gase (6) aufweist..

2. Hybridgasgenerator (1, 101, 201) gemäß Anspruch 1, **dadurch gekennzeichnet, dass**
i) der Behälter (2, 102, 202) und die Einfassung (3, 103, 203) eine allgemein zylindrische Form aufweisen, wobei die Rotationsachse (4) des Behälters (2, 102, 202) mit der Rotationsachse der Einfassung übereinstimmt,
ii) der Initiator (12, 112, 212) mit profilierter explosiver Ladung auf der Rotationsachse (4) des Behälters (2, 102, 202) und der Einfassung (3, 103, 203) angeordnet ist.

3. Hybridgasgenerator (1, 101, 201) gemäß Anspruch 2, **dadurch gekennzeichnet, dass** die Einfassung (3, 103, 203) aus einem hohlen, zylindrischen Körper (5, 105, 205) gebildet ist mit einer Seitenwand, welche die Öffnungen zur Gasableitung (6, 106, 206) trägt, einer Vorderwand (8, 108, 208), welche eine zu Anfang von einem Innenhütchen (9, 109, 209) verschlossene Öffnung trägt, und einem offenen Ende, in welchem ein Verschlussring (7, 107, 207) befestigt ist, der den Initiator (12, 112, 212) mit profilierter explosiver Ladung trägt.

4. Hybridgasgenerator (1) gemäß Anspruch 1, **dadurch gekennzeichnet, dass** die pyrotechnische Ladung (13) in Form eines ringförmigen Blocks ausgebildet ist, der um den Initiator (12) mit profilierter explosiver Ladung herum angeordnet ist.

5. Hybridgasgenerator (1) gemäß Anspruch 4, **dadurch gekennzeichnet, dass** der Initiator (12) mit profilierter explosiver Ladung mit Hilfe
i) eines Zündungsträgers (19),
ii) einer aufbrechbaren Kappe (22), welche einen ausgehöhlten Boden (26), eine Seitenwand (27) und ein auf dem Zündungsträger (19) befestigtes offenes Ende aufweist, wobei die Kappe (22) wenigstens eine explosive Zusammensetzung (29) auf der Basis von Nitramin einschließt und wobei die Seitenwand wenigstens einen brüchig ausgebildeten Bereich aufweist,
iii) und einem elektrischen Initiierungssystem, welches den Zündungsträger (19) mit einer Stromquelle verbindet,
ausgebildet ist.

6. Hybridgasgenerator (1) gemäß Anspruch 5, **dadurch gekennzeichnet, dass** die Kappe (22) ein Verstärkungspulver einschließt, das derart zwischen dem offenen Ende der Kappe (22) und der explosiven Zusammensetzung (29), die mit dem Boden (26) in Berührung ist, eingeschoben ist, dass das Verstärkungspulver gegenüber dem brüchig ausgebildeten Bereich angeordnet ist.

7. Hybridgasgenerator (1) gemäß Anspruch 5, **dadurch gekennzeichnet, dass** der brüchig ausgebildete Bereich von einem dünner ausgebildeten Umfangsrand (28) der Seitenwand (27) gebildet ist.

8. Hybridgasgenerator (1) gemäß Anspruch 5, **dadurch gekennzeichnet, dass** der Zündungsträger (19) von einem lsolierträger (20) gebildet ist, auf welchem ein Heizwiderstandselement (23) sowie die pyrotechnische Zündungszusammensetzung (24) angeordnet sind.

9. Hybridgasgenerator (1) gemäß Anspruch 8, **dadurch gekennzeichnet, dass** das elektrische Initiierungssystem von zwei, elektrischen Strom leitenden Stiften (25a, 25b) gebildet ist, welche mit dem Heizwiderstandselement (23) verbunden sind.

10. Hybridgasgenerator (1) gemäß Anspruch 8, **dadurch gekennzeichnet, dass** das Heizwiderstandselement eine Halbleiterbrücke ist.

11. Elektropyrotechnischer Initiator (12) mit insbesondere einem Zündungsträger (19), der in dem offenen Ende einer aufbrechbaren Kappe (22) befestigt ist, welche zumindest eine explosive Zusammensetzung (29) einschließt, und mit einem Initiierungssystem, das ermöglicht, den Zündungsträger (19) mit einer elektrischen Stromquelle zu verbinden, wobei die Kappe (19) einen ausgehöhlten Boden (26) aufweist, dessen Innenfläche in Kontakt mit der explosiven Zusammensetzung (29) ist, **dadurch gekennzeichnet, dass** die Kappe (22) eine Seitenwand (27) mit zumindest einem brüchig ausgebildeten Bereich aufweist.

12. Elektropyrotechnischer Initiator (12) gemäß Anspruch 11, **dadurch gekennzeichnet, dass** die explosive Zusammensetzung (29) von einem Verbundsprengstoff mit wenigstens einem Bindemittel und wenigstens einem Nitramin gebildet ist.

13. Elektropyrotechnischer Initiator (12) gemäß Anspruch 12, **dadurch gekennzeichnet, dass** die Kappe (22) einen primären Relais-Sprengstoff einschließt.

14. Elektropyrotechnischer Initiator (12) gemäß Anspruch 11, **dadurch gekennzeichnet, dass** die Kappe (22) ein Verstärkungspulver einschließt, das derart zwischen dem offenen Ende der Kappe (22) und der explosiven Zusammensetzung (29) eingeschoben ist, dass das Verstärkungspulver gegenüber dem brüchig ausgebildeten Bereich angeordnet ist.

15. Elektropyrotechnischer Initiator (12) gemäß Anspruch 12, **dadurch gekennzeichnet, dass** die Kappe (22) ein Gemisch (35) einschließt, das aus einem Verstärkungspulver und einem primären Relais-Sprengstoff besteht, wobei das Gemisch zwischen dem offenen Ende der Kappe (22) und der explosiven Zusammensetzung (29) derart eingeschoben ist, dass es gegenüber dem brüchig ausgebildeten Bereich angeordnet ist.

16. Elektropyrotechnischer Initiator (12) gemäß Anspruch 11, **dadurch gekennzeichnet, dass** der brüchig ausgebildete Bereich von einem dünner ausgebildeten Umfangsrand (28) der Seitenwand (27) gebildet ist.

17. Elektropyrotechnischer Initiator (12) gemäß Anspruch 11, **dadurch gekennzeichnet, dass** der Durchmesser der Kappe (22) zumindest gleich 8 mm ist.

18. Elektropyrotechnischer Initiator (12) gemäß Anspruch 11, **dadurch gekennzeichnet, dass** der Boden (26) kegelförmig ausgehöhlt ist und einen Öffnungswinkel aufweist, der höchstens gleich 30° ist.

19. Elektropyrotechnischer Initiator (12) gemäß Anspruch 11, **dadurch gekennzeichnet, dass** der Zündungsträger (19) von einem Isolierträger (20) gebildet ist, auf welchem ein Heizwiderstandselement (23) sowie eine pyrotechnische Zündungszusammensetzung (24) angeordnet sind.

20. Elektropyrotechnischer Initiator (12) gemäß Anspruch 19, **dadurch gekennzeichnet, dass** das Initiierungssystem von zwei, elektrischen Strom leitenden Stiften (25a, 25b) gebildet ist, welche mit dem Heizwiderstandselement (23) verbunden sind.

21. Elektropyrotechnischer Initiator (12) gemäß Anspruch 19, **dadurch gekennzeichnet, dass** das Heizwiderstandselement (23) eine Halbleiterbrücke ist.

22. Elektropyrotechnischer Initiator (12) gemäß Anspruch 19, **dadurch gekennzeichnet, dass** das Heizwiderstandselement ein in Kontakt mit der pyrotechnischen Zündungszusammensetzung (24) angeordneter Widerstrandsdraht ist.
